# EUROPEAN PATENT APPLICATION

(11) **EP 4 772 379 A1**
(43) Date of publication of application: **08.07.2026**
(21) Application number: 25208168.2
(22) Date of filing: 13.10.2025
(51) Int. Cl.: B60K 35/10, B60K 35/22, B60K 35/233, B60K 35/29, B60K 35/60, B60K 35/81, G06F 3/0484, G06F 3/04886, B60K 35/53

(54) **VEHICLE DISPLAY**

(30) Priority: 03.01.2025 KR 20250001108
(71) Applicant: Hyundai Mobis Co., Ltd., Gangnam-gu Seoul 06141 (KR)
(72) Inventor: KIM, Kyung Hoon, 16891 Yongin-si, Gyeonggi-do (KR); LEE, Jun, 16891 Yongin-si, Gyeonggi-do (KR); AHN, Sung Joon, 16891 Yongin-si, Gyeonggi-do (KR); AN, Hyun Jun, 16891 Yongin-si, Gyeonggi-do (KR); LEE, Shin Jik, 16891 Yongin-si, Gyeonggi-do (KR)
(74) Representative: Jung, Minkyu

(57) **Abstract**

A vehicle display includes: a windshield display displayed in one region of a windshield; and a center display disposed at a front of a vehicle cockpit module. The center display is linked to at least a portion of the windshield display, and a linkage region of the windshield display linked to the center display is by operating the center display and display content of the linkage region is changed by operating the center display.

## Description

### CROSS REFERENCE TO RELATED APPLICATION

This application claims priority to and the benefit of Korean Patent Application No. 10-2025-0001108, filed on January 3, 2025, the disclosure of which is incorporated herein by reference in its entirety.

### BACKGROUND

### 1. Field of the Invention

The present invention relates to a vehicle display, and more particularly, to a vehicle display in which a plurality of displays can be linked.

### 2. Description of Related Art

Recently, as people's vehicle usage time has increased and people have spent more time inside their vehicles, vehicles are being developed to provide more functions to their users.

A plurality of displays may be used inside a vehicle to easily control and display numerous functions of the vehicle. A user may operate a display to receive various functions and even control the functions of a vehicle.

However, it is not easy to provide displays of sufficient sizes in the limited space inside a vehicle, and it is also difficult to operate each of the displays. Particularly, since a driver who is driving needs to operate the display while looking ahead and around the vehicle, it is important not to be distracted by operating the display.

There is a need for a display that can be implemented in a sufficient size to provide a user with various functions and a vehicle display by which the user can easily operate the display.

### SUMMARY

One embodiment of the present invention is directed to providing a vehicle display that includes a plurality of displays.

Also, one embodiment of the present invention is directed to implementing a method for operating a plurality of displays in a way that is intuitive, does not require much attention from the driver, and is easy to operate.

The task to be solved by the present invention is not limited to the task described above, and other tasks not described herein will be clearly understood by those skilled in the art from the description below.

A vehicle display according to one embodiment of the present invention includes a windshield display configured to be displayed in one region of a windshield, and a center display disposed at the front of a vehicle cockpit module.

The center display is linked to at least a portion of the windshield display, and a linkage region of the windshield display linked to the center display is configured to be set by operating the center display and display content of the linkage region is configured to be changed by operating the center display.

The windshield display may extend at a lower end of the windshield in a width direction.

The center display may be configured to move up and down, and when the center display moves upward, the center display may be disposed adjacent to the windshield display based on a viewpoint of a driver and a passenger sitting in a passenger seat.

When the center display moves upward, the center display may be configured to display a continuous image with the windshield display.

The windshield display may include a first display region configured to be displayed in front of a driver, a second display region configured to be displayed in a center of the windshield, and a third display region configured to be displayed in front of a passenger seat.

At least a portion of the center display may be configured to display an operating portion for operating the linked display region of the windshield display.

The operating portion may include a first operating portion, a second operating portion, and a third operating portion, and the first, second, and third operating portions may be linked to the first, second, and third display regions, respectively.

The operating portion may be configured to change the display to one of the first, second, or third operating portions through a gesture of a user.

When the operating portion is dragged left and right, the first, second, and third operating portions may be displayed sequentially, and information on a display region of the windshield display that is linked may be displayed on one side of the operating portion.

The vehicle display may further include a horn cover display provided on a steering wheel, wherein the horn cover display is linked to the first display region.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a view showing a vehicle display according to one embodiment of the present invention;
FIG. 2 is a view showing a state in which a center display of the vehicle display according to one embodiment of the present invention moves;
FIG. 3 is a view showing a windshield display according to one embodiment of the present invention;
FIG. 4 is a view showing the center display according to one embodiment of the present invention;
FIG. 5 is a view showing an operating portion for linking the center display with the windshield display according to one embodiment of the present invention;
FIGS. 6 and 7 are views showing states in which a region in which the center display according to one embodiment of the present invention is linked to the windshield display is changed;
FIGS. 8A, 8B, 8C, 9A, 9B, and 9C are views showing a state in which the display contents of the windshield display according to one embodiment of the present invention are changed;
FIG. 10 is a view showing a state in which a horn cover display and the windshield display are linked according to one embodiment of the present invention; and
FIG. 11 is a view showing a state in which the windshield display is linked to the center display according to one embodiment of the present invention depending on the arrangement of the center display.

### DETAILED DESCRIPTION

The present invention may be modified in various ways and has various embodiments, and specific embodiments are illustrated in the drawings and will be described in detail. However, this is not intended to limit the present invention to any particular embodiment, and is to be understood to include all modifications, equivalents, or substitutions that fall within the scope of the ideas and techniques of the present invention. In describing the present invention, when it is determined that a detailed description of a related known technology may obscure the gist of the present invention, the detailed description thereof is omitted.

Although the terms first, second, and the like may be used to describe various components, the above components need not to be limited by the above terms. The above terms are used solely to distinguish one component from another.

The terminology used in the present application is used only to describe particular embodiments and is not intended to limit the present invention. Singular expressions include plural expressions unless the context clearly indicates otherwise. In the present application, it should be understood that terms such as "includes" or "has" are intended to specify the presence of a feature, number, step, operation, component, part or combination thereof described in the specification, but do not exclude in advance the possibility of the presence or addition of one or more other features, numbers, steps, operations, components, parts or combinations thereof.

Also, throughout the specification, when "connected" is described, this does not only mean that two or more components are directly connected, but also that two or more components are indirectly connected through other components, that they are electrically connected as well as physically connected, or that they are referred to by different names depending on location or function but are one.

Additionally, when one component is described as being formed or disposed "above (upper) or below (lower)" another component, above (upper) or below (lower) includes not only cases where the two components are in direct contact with each other, but also cases where one or more still other components are formed or disposed between the two components. Additionally, when expressed as "above (upper) or below (lower)," it may include the meaning of not only the upward direction but also the downward direction based on one component.

Hereinafter, one embodiment of a vehicle display according to the present invention will be described in detail with reference to the attached drawings. When describing with reference to the attached drawings, identical or corresponding components are denoted by the same drawing numbers and redundant descriptions thereof are omitted.

A vehicle is provided with a display device to provide and control various functions. A conventional vehicle may be provided with a center display disposed at the front of a cockpit module and a display performing the instrument panel function of the vehicle on a cluster side. Recently, for the driver's safety, head-up displays that are disposed in the driver's field of vision while the driver looks ahead without having to bend or turn his/her head have been installed.

Each of the displays may display preset display content. However, each of the displays is usually operated individually, and the functions performing displays are not diverse. Additionally, since the sizes of the displays are limited, the content and information that can be displayed are also limited.

A windshield of the vehicle has a configuration that covers a wide portion in a width direction of the vehicle at the front of the vehicle.

The present invention provides a vehicle display including a plurality of displays including a windshield display.

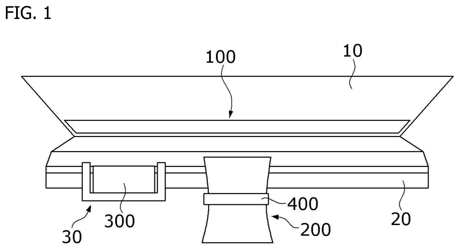

FIG. 1 is a view showing a vehicle display according to one embodiment of the present invention.

Referring to FIG. 1, the vehicle display according to one embodiment of the present invention may include a windshield display 100 displayed on one region of a windshield 10 and a center display 200 disposed at the front of a vehicle cockpit module 20. Additionally, a horn cover display 300 provided on a steering wheel 30 of the vehicle may be further included.

The windshield display 100 may be linked to the center display 200 and the horn cover display 300. The windshield display 100 may be formed to have a large area. At least a portion of the windshield display 100 may be linked to the center display 200 or the horn cover display 300.

First, the linkage between the windshield display 100 and the center display 200 will be described.

The center display 200 may be disposed in the space between a driver seat and a passenger seat. The cockpit module 20 is disposed in front of the driver seat and the passenger seat. The cockpit module 20 may be disposed to cover the front of the vehicle, and the center display 200 may be provided on one surface of the cockpit module 20. A surface of the cockpit module 20 that faces the driver seat and the passenger seat may be defined as the front. In this case, the center display 200 may be disposed at the front of the cockpit module 20.

The space where the center display 200 is provided may correspond to a center fascia. In a conventional vehicle, the center fascia may be provided with a plurality of knobs and buttons to operate the functions of the vehicle. In the case of the present invention, the center display 200 may be disposed on the center fascia, and various functions of the vehicle may be controlled through the center display 200.

The center display 200 may be formed to be touch-enabled. The center display 200 may detect a user's touch and may be operated according to the user's touch. The user may operate various functions of the vehicle by operating the center display 200. Additionally, the user may operate the windshield display 100 that is linked to the center display 200 by operating the center display 200.

The windshield display 100 may be formed in one region of the windshield 10. Referring to FIG. 1, the windshield display 100 may be shown as extending in a width direction at a lower end of the windshield 10. The windshield display 100 may extend in the width direction of the vehicle along a surface of the windshield 10 from an upper side of the cockpit module 20.

The driver may look ahead through the windshield 10. The driver may look at the windshield display 100 provided on the windshield 10 while looking ahead. The windshield display 100 may be provided at the lower end of the windshield 10 to minimize interference with the driver's field of view.

The transparency of the windshield display 100 may be adjusted. That is, when the transparency of the windshield display 100 is at its maximum, or when the windshield display 100 is turned off, the windshield display 100 may be formed transparently. From the driver's viewpoint, the windshield 10 may be formed as a transparent region as a whole without any partitioned regions.

The windshield display 100 may be implemented by attaching a film to the windshield 10 and irradiating the region where the film is attached with light using a projector. The cockpit of the vehicle may be provided with the projector that projects light onto the windshield 10. A plurality of projectors may be provided, each of which may project light onto one region of the windshield display 100.

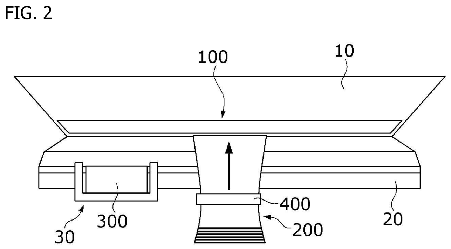

FIG. 2 is a view showing a state in which the center display of the vehicle display according to one embodiment of the present invention moves.

Referring to FIG. 2, the position of the center display 200 may be changed. The center display 200 may move up and down and its position may be changed. The center display 200 may be disposed at the front of the cockpit module 20 and may move up and down.

When the center display 200 moves downward to the maximum, the center display 200 may not protrude upward from the cockpit module 20. When the user sitting in the driver seat or the passenger seat looks at the windshield 10, the center display 200 may be disposed so as not to obscure the windshield display 100. In this case, the center display 200 may be disposed spaced a predetermined distance apart from the lower end of the windshield 10.

When the center display 200 moves upward to the maximum, the center display 200 may at least protrude upward from the cockpit module 20. From the viewpoint of the user sitting in the driver seat or the passenger seat, the center display 200 may be disposed at the lower end of the windshield 10. The center display 200 may be disposed adjacent to the lower end of the windshield 10. From the driver's viewpoint, a lower edge of the windshield display 100 may be in contact with an upper edge of the center display 200.

The arrangement of the center display 200 may be adjusted linearly, and may also be disposed in a preset position. For example, the center display 200 may be disposed between the lowest height and the highest height, and the user may operate the height of the center display 200 using a knob or button.

Alternatively, the center display 200 may be disposed at a preset height. For example, the height of the center display 200 may be set to high, middle, or low levels. When the height of the center display 200 has the high level, the center display 200 may be disposed at the highest height. When the height of the center display 200 has the low level, the center display 200 may be disposed at the lowest height. When the height of the center display 200 has the middle level, the center display 200 may be disposed between the lowest height and the highest height.

A garnish operating portion for operating the center display 200 or the windshield display 100 may be formed on a garnish of the cockpit. At least a portion of the garnish may be formed to be touchable. The passenger sitting in the passenger seat may operate the display without disturbing the driver through the garnish operating portion. The garnish operating portion may be provided in the form of a display, and may implement a hidden image when not operated by the user. That is, when the garnish operating portion is not used, a continuous image of the garnish may be displayed.

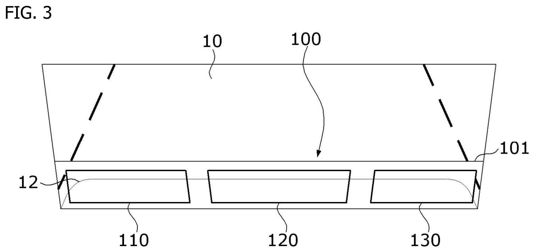

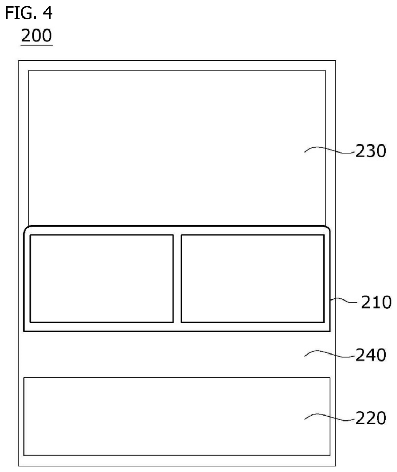

FIG. 3 is a view showing the windshield display according to one embodiment of the present invention, and FIG. 4 is a view showing the center display according to one embodiment of the present invention.

Referring to FIG. 3, the windshield display 100 according to one embodiment of the present invention may include a display portion 101 in which an actual display is implemented. The display portion 101 may include a plurality of display regions. In this embodiment, the windshield display 100 in which three display regions 110, 120, and 130 are formed on the display portion 101 from the left to the right based on the drawing is shown.

The display portion 101 may be a portion of the windshield display 100 that actually performs a display function. The display portion 101 may include at least one display region. In this embodiment, the display portion 101 including three display regions 110, 120, and 130 is shown. The display portion 101 may perform a display function through a portion corresponding to a display region, and may also perform a display function in a region outside the display region. That is, the display function may also be provided in a space between the display regions or in a space formed above or below the display region.

Each of the display regions may be partitioned to display a plurality of pieces of information. Different information may be displayed in the partitioned regions. The driver and the passenger may check information necessary for driving through the display region. It is also possible to provide other information or functions that are not necessary for driving. The display regions may provide functions such as media playback.

Each of the display regions may be partitioned to display different information while simultaneously performing the display function as one unit. The user may select a method for displaying the display region. The windshield display 100 shown in FIG. 3 includes three display regions 110, 120, and 130, and each of the display regions may display a plurality of widgets W. The widgets W may display different information and functions.

For example, when a navigation function is displayed in the display region, the user may operate the navigation function to be displayed throughout the entire specific display region when he or she wants to check a large map. Alternatively, when the user wants to check a small map while also displaying an additional function, the user may operate the display region so that the navigation function is displayed through at least a portion of a specific display region. Other information may be displayed in the remaining regions.

The windshield display 100 may include a plurality of display regions, each of which may be linked to the center display 200.

The center display 200 may be partitioned into a plurality of regions. The center display 200 may include an operating portion that is linked to the windshield display 100. The operating portion may display information corresponding to each display region of the windshield display 100. The operating portion may display buttons and knobs that can operate the functions provided by each display region of the windshield display 100. The user may control the windshield display 100 by operating the operating portion.

The windshield display 100 may be formed at the lower end of the windshield 10, and a bonnet 12 and the windshield display 100 may overlap from the driver's and passenger's viewpoints. In FIG. 3, the bonnet 12 may be shown to overlap the display portion 101. The arrangement of the bonnet 12 may be fixed based on the vehicle and driver so that the background portion of the display portion 101 provides a fixed field of view. That is, when information is displayed on the display unit 101, the visibility of the information can be improved because the background does not move.

In the case of FIG. 4, a state in which the operating portion is formed on the center display 200 is shown. The center display 200 may include a plurality of regions, and at least one of the plurality of regions may correspond to an operating portion.

The center display 200 shown in FIG. 4 may include a first window 210 and a second window 220. The first window 210 and the second window 220 may be separated by a control plate 400 that can control the center display 200. The first window 210 of FIG. 4 may be linked to one region of the windshield display 100. That is, the first window 210 may correspond to an operating portion. The display content of the first window 210 or the second window 220 may be changed, and each window may display an operating portion that is linked to a different display region of the windshield display 100.

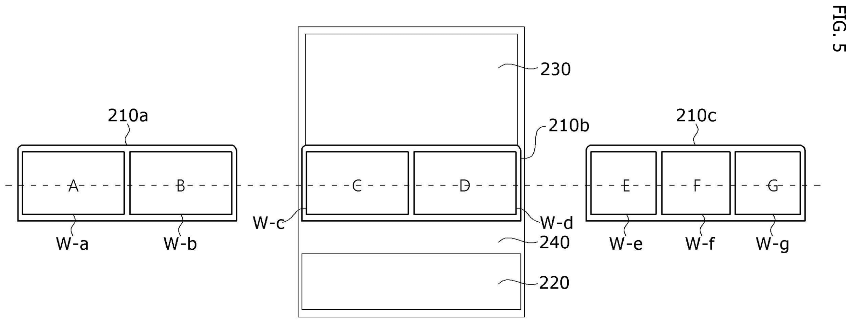

FIG. 5 is a view showing the operating portion for linking the center display with the windshield display according to one embodiment of the present invention.

Referring to FIG. 5, the center display 200 may display three operating portions 210a, 210b, and 210c so as to be linked to the windshield display 100 in which three display regions 110, 120, and 130 are formed. The three operating portions 210a, 210b, and 210c may be displayed simultaneously on the center display 200. Alternatively, it is also possible to display only at least some of the plurality of operating portions shown in FIG. 5. The user may change the operating portion to be displayed by operating the center display 200.

The center display 200 of FIG. 5 may display the operating portion corresponding to the windshield display 100 of FIG. 3. The windshield display 100 of FIG. 3 includes three display regions. The display region may be defined as a first display region 110, a second display region 120, and a third display region 130. The first to third display regions 110, 120, and 130 may be disposed sequentially in the width direction of the vehicle.

The windshield display 100 shown in FIG. 3 extends in the width direction of the vehicle at the lower end of the windshield 10. The first display region 110 may be disposed in front of the driver seat. The third display region 130 may be disposed in front of the passenger seat. The second display region 120 may be disposed between the first display region 110 and the third display region 130.

In response to this, the operating portion may include a first operating portion 210a, a second operating portion 210b, and a third operating portion 210c. The first operating portion 210a to the third operating portion 210c may be linked to the first display region 110 to the third display region 130, respectively.

When the operating portion and the display region are described as being linked, the expression "linked" may include the following examples.

When the operating portion and the display region are linked, the operating portion may display a knob or button that can control the function displayed in the display region. Alternatively, it is also possible to display the same information as the information displayed in the display region. The user may control the functions displayed in the linked display region or change the display of the linked display region by operating the operating portion.

Alternatively, the operating portion may display additional information of the information displayed in the linked display region. For example, when the speed of the vehicle is displayed in the display region, information such as the acceleration and average speed of the vehicle, the speeds of surrounding vehicles, or the speed limit of the road on which the vehicle is driving may be displayed in the operating portion.

The above content is an example, and when the operating portion and the display region can interact with each other, the operating portion and the display region may be considered to be linked.

The first operating portion 210a, the second operating portion 210b, and the third operating portion 210c shown in FIG. 5 may be displayed simultaneously on the center display 200. Alternatively, as shown in FIG. 5, the display content of the center display 200 may be changed so that each of the operating portions is displayed. Since the windshield display 100 may be formed by extending left and right at an upper portion of the center display 200, and a virtual line extending left and right may be designated on the center display 200.

The first operating portion 210a to the third operating portion 210c may be disposed sequentially on the virtual line. The virtual line may move left and right through the user's operation (gesture). The virtual line may move and each of the first operating portion 210a to the third operating portion 210c may be displayed.

The virtual line is an example, and the first operating portion 210a to the third operating portion 210c may be displayed in separate layers displayed in the first window 210. That is, the first operating portion 210a to the third operating portion 210c may be displayed in first to third layers, respectively. The layers displayed in the first window 210 may be switched through the user's operation (gesture). The layers may be switched and the operating portion displayed on the center display 200 may be changed.

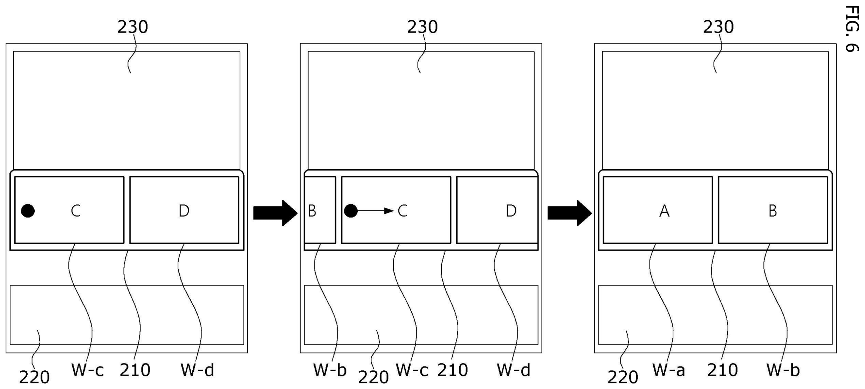

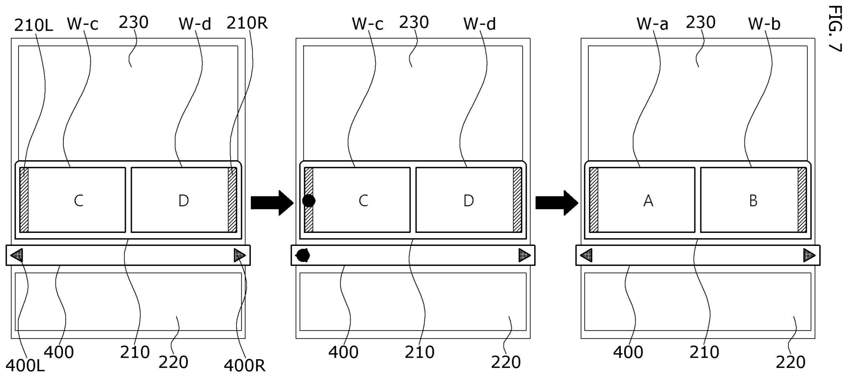

FIGS. 6 and 7 are views showing states in which a region in which the center display according to one embodiment of the present invention is linked to the windshield display is changed.

Referring to FIG. 6, a state in which the operating portion of the center display 200 according to one embodiment of the present invention is switched may be confirmed. The user may switch the operating portion by touching the operating portion and dragging the operating portion to one side or the other.

For example, the second operating portion 210b linked to the second display region 120 is described based on the state displayed on the first window 210.

The user may touch a point on the second operating portion 210b. When dragging to the right while maintaining the touch, the second operating portion 210b may move to the right following the user's drag. The first operating portion 210a may be disposed on the left side of the second operating portion 210b. Depending on the user's drag, the operating portion may be switched to the form in which the first operating portion 210a is dragged out from the left edge of the first window 210. The second operating portion 210b may disappear through the right edge of the first window 210.

Likewise, when the user touches a point on the second operating portion 210b and drags the point to the left, the operating portion may be switched to the form in which the third operating portion 210c is dragged out from the right edge of the first window 210. The second operating portion 210b may disappear through the left edge of the first window 210.

The first operating portion 210a to the third operating portion 210c may be switched in sequence. When the user drags the first operating portion 210a to the right while the first operating portion 210a is displayed on the first window 210, the third operating portion 210c may be pulled out and switched from the left edge of the first window 210.

Referring to FIG. 7, the operating portion may be switched by touching one surface of the center display 200 or the control plate 400.

Display buttons for implementing switching of the operating portion may be displayed in the center display 200 or the control plate 400. The user may switch among the first operating portion 210a to the third operating portion 210c by touching the corresponding button.

Alternatively, the switching of the operating portion may be implemented by touching the edge of the center display 200 or the control plate 400 without a separate button. The user may switch the operating portion by touching the left or right edge of the center display 200 or the control plate 400.

In a state in which the second operating portion 210b is displayed on the first window 210, when the user touches a left edge 210L or 400L of the center display 200 or the control plate 400, the first operating portion 210a may be displayed on the first window 210. The first operating portion 210a may be displayed as a motion that pops out from the left edge of the first window 210.

Likewise, in a state in which the second operating portion 210b is displayed on the first window 210, when the user touches a right edge 210R or 400R of the center display 200 or the control plate 400, the third operating portion 210c may be displayed on the first window 210. The third operating portion may be displayed as a motion that pops out from the right edge of the first window 210.

Characters or symbols that allow the display region to which the operating portion is linked to be recognized may be displayed in the operating portion. When the display regions are named first, second and third display regions as in this embodiment, the numbers "1," "2," and "3" may be displayed on the first to third operating portions, respectively.

When the display regions are named a driver seat display region, a center display region, and a passenger seat display region, the first to third operating portions may display the expressions "driver seat," "center," and "passenger seat," respectively.

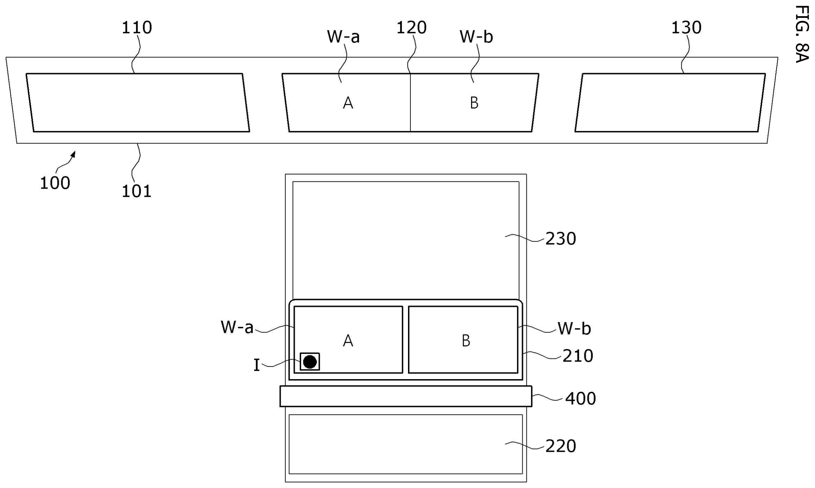

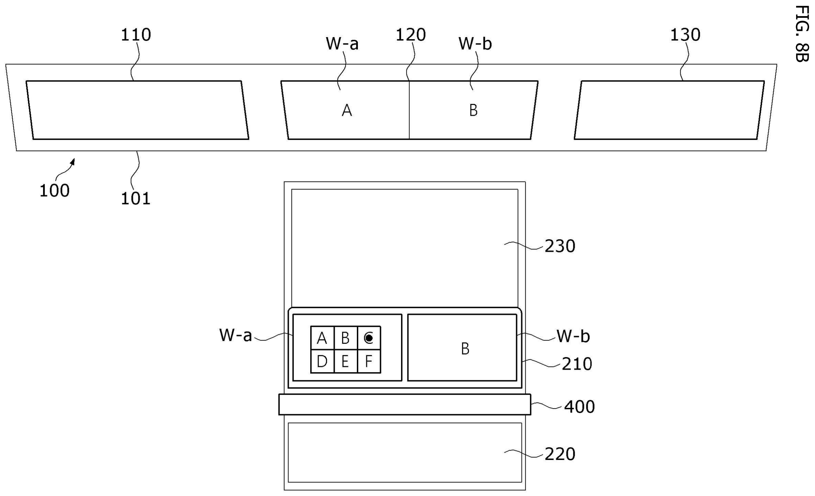

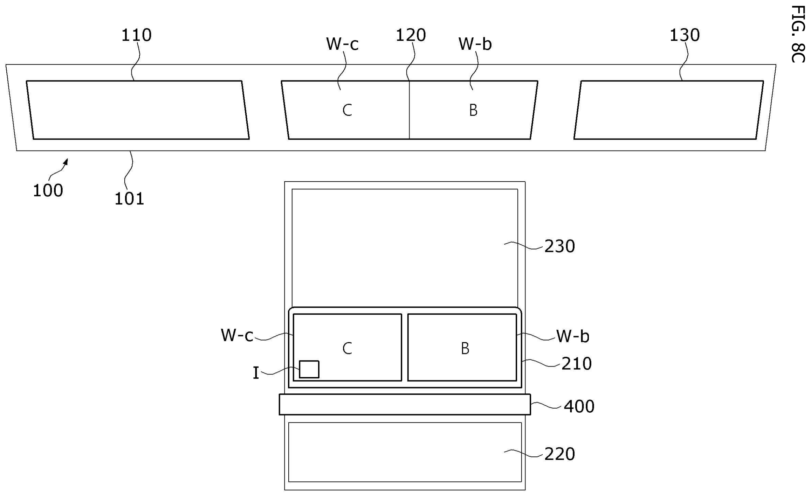

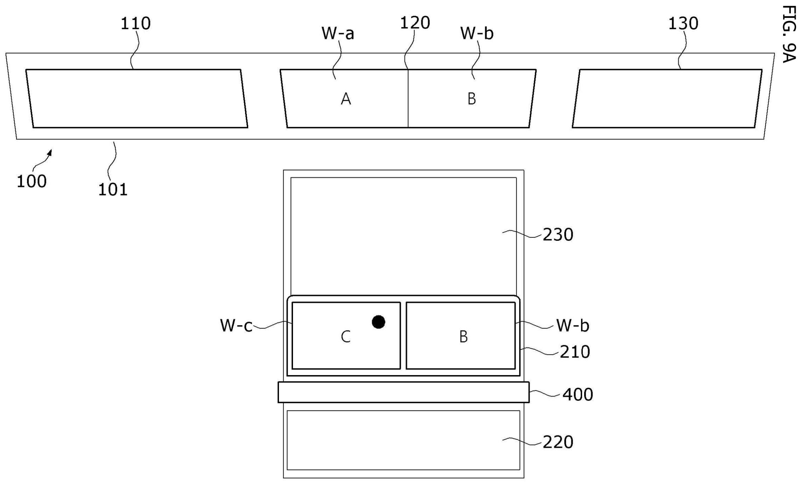

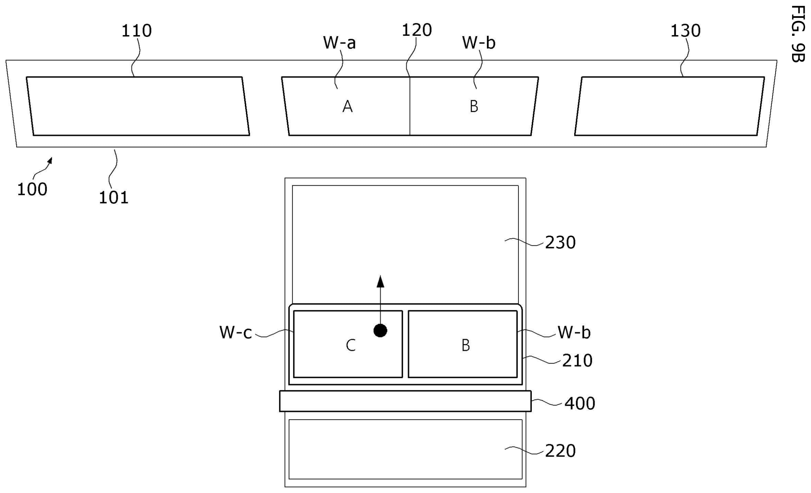

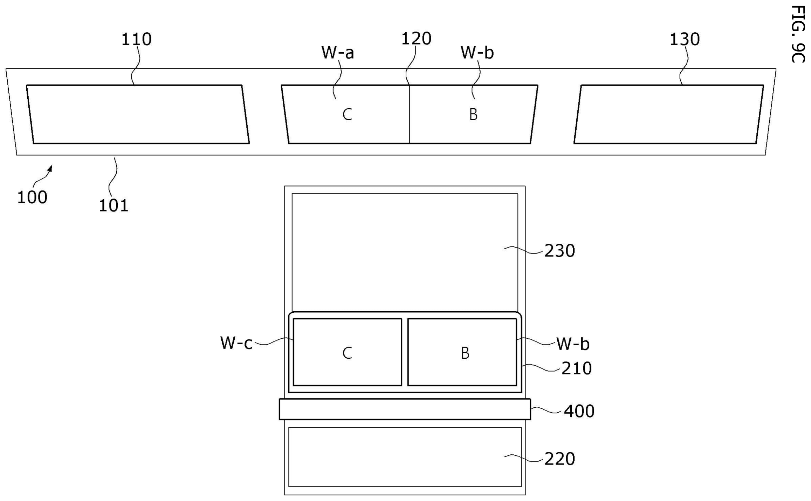

FIGS. 8 and 9 are views showing a state in which the display contents of the windshield display according to one embodiment of the present invention are changed.

FIGS. 8 and 9 show, as examples, states in which the display content of the second display region 120 is changed through the second operating portion 210b. A method for operating the first display region 110 or the third display region 130 through the first operating portion 210a or the third operating portion 210c may also be implemented in the same manner.

Referring to FIG. 8, the user may change the content of a linked display region by touching the operating portion.

FIGS. 8A to 8C are views sequentially showing a method for changing the display content of the display region according to the user's touch.

A widget W may be displayed in the second display region 120. The widget W is a unit that displays a specific function or information. The user may select a widget W that displays a desired function or information among a plurality of widgets W and operate the widget W so that the widget W is displayed on the display region and the operating portion.

For example, a specific widget W may display information about an air conditioning mode of the vehicle. When the widget W that displays the information about the air conditioning mode is displayed in the display region and the operating portion, the user may change the air conditioning mode by operating the widget W. A knob and button for controlling the air conditioning mode may be displayed in the corresponding widget W in the operating portion. The user may adjust the air volume, heating/cooling temperature, or wind direction by operating the corresponding widget W in the operating portion. Information about the air volume, heating/cooling temperature, wind direction, and air conditioning mode being applied according to the user's operation may be displayed in the display region.

Since the display region is not a portion that is directly operated, the user may focus on displaying information. Since the operating portion is a portion that is directly operated, the operating portion may provide an active function for operation.

Two widgets W displayed in the second display region 120 may be referred to as an A widget W-a and a B widget W-b. In response to this, the A widget W-a and the B widget W-b may be displayed in the second operating portion 210b so that the A widget W-a and the B widget W-b can be operated.

The operating portion may provide an icon I for changing the widget W. The icon I may be displayed in one region of each widget W. When the user touches the corresponding icon I displayed on the A widget W-a, the operating portion may display a screen listing a plurality of widgets W. The user may select a specific widget W from among the plurality of widgets W listed. When the user selects a C widget W-c, the display on the operating portion may change to display the C widget W-c instead of the A widget W-a. In response to this, the C widget W-c may be displayed in the portion where the A widget W-a of the second display region 120 was displayed.

Referring to FIG. 9, the user may change the content of a linked display region by dragging the operating portion.

FIGS. 9A to 9C are drawings sequentially showing states in which the display content of the display region changes according to the user's drag.

Two widgets W displayed in the second display region 120 may be referred to as an A widget W-a and a B widget W-b. In the second operating portion 210b, the A widget W-a and the B widget W-b may be displayed so that the A widget W-a and the B widget W-b can be operated correspondingly. In contrast, the second operating portion 210b may display a widget W different from the widget W displayed in the second display region 120.

For example, as shown in FIG. 9A, the second operating portion 210b may display the C widget W-c through the user's operation. Although the second display region 120 is linked to the second operating portion 210b, the content displayed may not change immediately according to the user's operation. That is, in a case in which the user displays the A widget W-a and the B widget W-b in the second operating portion 210b, and the A widget W-a and the B widget W-b are displayed correspondingly in the second display region 120, when the C widget W-c is displayed instead of the A widget W-a in the second operating portion 210b by the user's operation, the second display region 120 may maintain a state in which the A widget W-a is displayed.

The user may form the operating portion and the display region that are linked and have different display contents. When the user wants to display the C widget W-c in the display region as well, the user may touch the C widget W-c and drag the C widget W-c upward. That is, the user may change the display content of the windshield display 100 by dragging the widget W in the operating portion toward the windshield display 100. When the user drags the C widget W-c upward, the C widget W-c may be displayed in the second display region 120 linked thereto.

It may be difficult for a driver to operate a button present on the outside of the steering wheel while driving. Changing the display of the display region by touching the exact location may require a lot of attention from the driver. In the drag mode, the user may change the displayed content of the display region by touching any large region of the operating portion and then dragging the large region upward. In this case, the driver may maintain his/her eyes on the road ahead, which can improve the safety of driving.

When the user changes the display content of the display region by dragging a specific widget W upward, an effect in which the widget W moves from the bottom to the top and is displayed may be displayed in the display region. That is, it is possible to provide a sense of operation in which the widget W appears to be linked in response to the user's gesture. Similarly, when the display of the display region changes, a haptic response may be provided to the user. The haptic response may be provided through a vibration response of the center display 200 or the steering wheel 30. Alternatively, a separate notification sound may be provided.

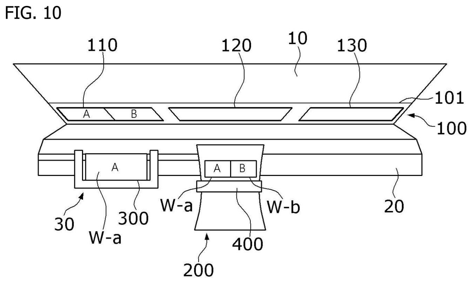

FIG. 10 is a view showing a state in which the horn cover display and the windshield display are linked according to one embodiment of the present invention.

Referring to FIG. 10, the horn cover display 300 and the windshield display 100 according to one embodiment of the present invention are shown as being linked while displaying the same widget W. The horn cover display 300 may be disposed on a horn cover of the steering wheel 30. The horn cover may be disposed in front of the driver and configured to be disposed closest to the driver so that the driver easily operates the horn cover display 300. The driver may operate the horn cover display 300 while looking ahead.

The horn cover display 300 may be formed smaller than the windshield display 100 or the center display 200. Therefore, the horn cover display 300 may be linked to at least a portion of the windshield display 100. The horn cover display 300 may be operated by the driver and linked to the first display region 110. The first display region 110 may display information and functions helpful for driving. The driver may operate the display content of the first display region 110 by operating the horn cover display 300 that is linked to the first display region 110.

FIG. 10 shows the horn cover display 300 that is linked to a part of the first display region 110. The first display region 110 may display a plurality of widgets W. In the case of FIG. 10, it is shown that a widget A W-a and a widget B W-b are displayed. The horn cover display 300 may display both the A widget W-a and the B widget W-b. Alternatively, it is also possible to display at least some of the widgets W, as shown in FIG. 10.

The A widget W-a of the first display region 110 may be displayed on the center display 200 while being displayed on the horn cover display 300. That is, the portion where the A widget W-a is displayed may be operated through both the horn cover display 300 and the center display 200. The driver may operate the A widget W-a or change the display content by operating the horn cover display 300.

In situations where it is difficult for the driver to operate the horn cover display 300, the driver or the user sitting in the passenger seat may operate the A widget W-a or change the display content by operating the center display 200.

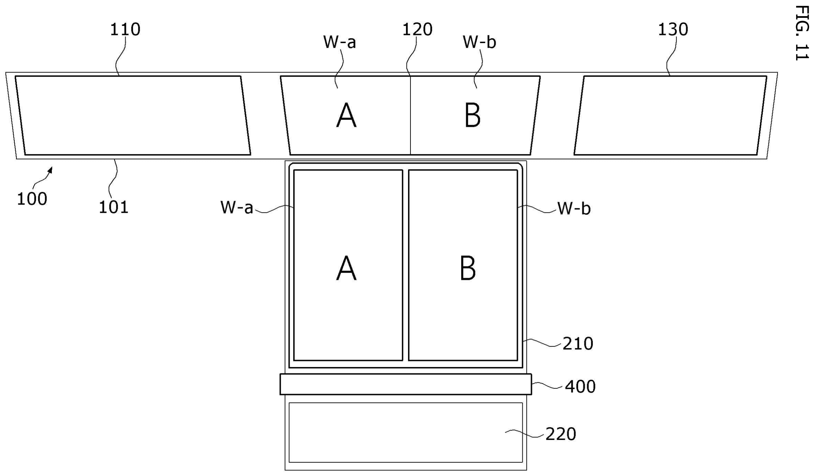

FIG. 11 is a view showing a state in which the windshield display is linked to the center display according to one embodiment of the present invention depending on the arrangement of the center display.

The center display 200 may move up and down. When the center display 200 moves upward to the maximum, the upper side of the center display 200 and the lower end of the windshield display 100 may be disposed to be in contact with each other from the driver's or passenger's viewpoint.

FIG. 11 shows a state in which the windshield display 100 and the center display 200 are disposed so as to be in contact with each other. The center display 200 may move upward as much as possible so that the upper edge of the center display 200 is disposed adjacent to the windshield display 100.

The center display 200 may be disposed on a center side of the windshield display 100. Thus, when the center display 200 moves upward, the center display 200 may be disposed at the lower end of the second display region 120. When the center display 200 moves upward to the maximum, the display content of the second display region 120 may be changed.

When the user moves the center display 200 upward as much as possible by operating the center display 200, the windshield display 100 may be automatically linked to the center display 200. That is, as the arrangement of the center display 200 changes, the display of the windshield display 100 may be changed to correspond to the display content of the center display 200.

The windshield display 100 may display a continuous image with the center display 200. As shown in FIG. 11, the second display region 120 may display content that is continuous with the content displayed on the center display 200 on the upper side of the center display 200.

A plurality of windows may be displayed on the center display 200. Each of the windows is resizable. It is also possible to adjust a size of the first window 210 in which the operating portion linked to the windshield display 100 is displayed. When the user covers the third window 230 by adjusting the size of the first window 210, the first window 210 may be displayed while extending from the upper portion of the center display 200.

The first window 210 may cover the entire upper side of the control plate 400. In this case, the first window 210 may extend to the lower end of the second display region 120 depending on the arrangement of the center display 200. When the center display 200 is disposed at the maximum height and the first window 210 extends upward, the display content of the second display region 120 may also change depending on the content displayed on the first window 210.

This embodiment illustrates displaying the A widget W-a and the B widget W-b in the second operating portion 210b displayed in the first window 210. Displays corresponding to the A widget W-a and the B widget W-b may also appear in the second display region 120 depending on the display content of the second operating portion 210b.

For example, a case where a navigation function is displayed in the second operating portion 210b is examined. When the navigation function is provided, the second operating portion 210b may display the location of the vehicle and a map of the region around the vehicle. A size of the map may be limited to a size of the second operating portion 210b.

When the second operating portion 210b extends upward to display a continuous image with the second display region 120, the map may be displayed by extending to the second display region 120. The user may look at a wider range of the map.

In contrast, when watching a video through a media function on the center display 200, the video may extend from the center display 200 and may be displayed on the second display region 120. The user may watch a video on a larger screen.

When the second display region 120 and the second operating portion 210b display a continuous image, a width of the second display region 120 may be changed to correspond to a width of the second operating portion 210b. The windshield display 100 may have adjustable transparency. Accordingly, the second display region 120 may display information up to a portion corresponding to the width of the second operating portion 210b, and the surrounding region may be set to be transparent.

According to one embodiment of the present invention, a windshield display and a center display can be linked so that the windshield display and the center display can be easily operated, and a plurality of displays can each be partitioned into a plurality of regions, and the partitioned regions can provide different information and functions.

The various beneficial advantages and effects of the present invention are not limited to the above-described contents, and will be more easily understood in the process of describing specific embodiments of the present invention.

Although the present invention has been described above with reference to specific embodiments thereof, it will be understood by those skilled in the art that various modifications and changes may be made to the present invention without departing from the spirit and scope of the present invention as set forth in the claims below.

## Claims

1. A vehicle display comprising:
a windshield display configured to be displayed in one region of a windshield; and
a center display disposed at a front of a vehicle cockpit module,
wherein the center display is linked to at least a portion of the windshield display, and
wherein a linkage region of the windshield display linked to the center display is configured to be set by operating the center display and display content of the linkage region is configured to be changed by operating the center display.

2. The vehicle display of claim 1, wherein the windshield display extends at a lower end of the windshield in a width direction.

3. The vehicle display of claim 1 or 2, wherein the center display is configured to move up and down, and
when the center display moves upward, the center display is disposed adjacent to the windshield display based on a viewpoint of a driver and a passenger sitting in a passenger seat.

4. The vehicle display of claim 3, wherein, when the center display moves upward, the center display is configured to display a continuous image with the windshield display.

5. The vehicle display of any one of claims 1 to 4, wherein the windshield display includes:
a first display region configured to be displayed in front of a driver;
a second display region configured to be displayed in a center of the windshield; and
a third display region configured to be displayed in front of a passenger seat.

6. The vehicle display of claim 5, wherein at least a portion of the center display is configured to display an operating portion for operating the linked display region of the windshield display.

7. The vehicle display of claim 6, wherein the operating portion includes a first operating portion, a second operating portion, and a third operating portion, and
the first, second, and third operating portions are linked to the first, second, and third display regions, respectively.

8. The vehicle display of claim 7, wherein the operating portion is configured to change the display to one of the first, second, or third operating portions through a gesture of a user.

9. The vehicle display of claim 7 or 8, wherein, when the operating portion is dragged left and right, the first, second, and third operating portions are displayed sequentially, and information on a display region of the windshield display that is linked is displayed on one side of the operating portion.

10. The vehicle display of any one of claims 5 to 9, further comprising a horn cover display provided on a steering wheel,
wherein the horn cover display is linked to the first display region.
